# EUROPÄISCHE PATENTSCHRIFT

(11) **EP 2 976 936 B1**
(45) Veröffentlichungstag und Bekanntmachung des Hinweises auf die Patenterteilung: **18.03.2020**
(21) Anmeldenummer: 15165247.6
(22) Anmeldetag: 27.04.2015
(51) Int. Cl.: A01D 34/30, A01D 34/37, A01D 34/135

(54) **SCHNEIDWERK FÜR EINE ERNTEMASCHINE**
CUTTING ASSEMBLY FOR A HARVESTER
BARRE DE COUPE POUR UNE MOISSONNEUSE

(30) Priorität: 22.07.2014 DE 102014010684
(43) Veröffentlichungstag der Anmeldung: 27.01.2016
(73) Patentinhaber: CLAAS Selbstfahrende Erntemaschinen GmbH, 33428 Harsewinkel (DE)
(72) Erfinder: Fischer, Frédéric, 59823 Arnsberg (DE); Kettelhoit, Boris, 33335 Gütersloh (DE); Neitemeier, Dennis, 59510 Lippetal-Herzfeld (DE)
(74) Vertreter: CLAAS Gruppe

(56) Entgegenhaltungen:
- DE-A1- 2 419 361
- DE-A1- 4 315 939
- DE-U1- 20 301 750
- GB-A- 2 475 953

## Beschreibung

Die vorliegende Erfindung betrifft ein Schneidwerk für eine selbstfahrende Erntemaschine wie etwa einen Mähdrescher, einen Feldhäcksler oder dergleichen. Derartige Schneidwerke haben herkömmlicherweise einen oder mehrere Messerleisten, die zum Mähen von Erntegut eine linear oszillierende Bewegung quer zur Fahrtrichtung der Erntemaschine ausführen. Herkömmlicherweise ist die Bewegung der Messerleisten meist von einem Motor der den Erntevorsatz tragenden Erntemaschine über einen Treibriemen und ein Verteilergetriebe angetrieben, das das Drehmoment des Motors auf die Messerleiste und andere angetriebene Komponenten des Schneidwerks wie etwa eine Einzugwalze überträgt. Um die sich über die gesamte Arbeitsbreite des Erntevorsatzes erstreckende Einzugwalze antreiben zu können, muss das Verteilergetriebe seitlich gegen die Einzugwalze und die Messerleiste versetzt Platz finden, so dass das Schneidwerk als Ganzes deutlich breiter ist als seine durch die Abmessungen der Messerleisten bestimmte Arbeitsbreite. Pflanzen, die in Fahrtrichtung der Erntemaschine vor dem Verteilergetriebe stehen, können nicht unmittelbar geschnitten werden, sondern müssen seitwärts, entweder in Richtung der Messerleiste oder in Richtung des verbleibenden Pflanzenbestandes, abgelenkt werden, um in einem folgenden Durchgang der Erntemaschine über das Feld gemäht zu werden. Dabei besteht eine nicht vernachlässigbare Wahrscheinlichkeit, dass die abgelenkten Pflanzen Erntegut verlieren oder umkippen und vom Schneidwerk nicht mehr aufgenommen werden können.

Um die Drehung des Verteilergetriebes in die Linearbewegung der Messerleiste umzusetzen, wird ein Taumelgetriebe benötigt. In einem solchen Taumelgetriebe entstehen Kräfte, die die Messerleiste orthogonal zu ihrer Bewegungsrichtung belasten und deren Verschleiß fördern.

Aus EP 1 772 051 A1 ist ein Getriebe zum Antreiben einer oszillierenden Messerleiste bekannt, das einerseits mit einem drehantreibenden Hydraulik- oder Elektromotor zu einer Baueinheit verbunden sein kann und andererseits ein Abtriebselement aufweist, das in eine Bohrung eines Messerkopfes eingreift. Zwar soll dieses Getriebe klein bauen, so dass das Verhältnis von Arbeitsbreite zu Gesamtbreite eines damit ausgestatteten Schneidwerks günstiger wird, doch benötigt offenbar auch dieses Getriebe Platz seitlich von den Messerleisten. Da das Abtriebselement auf einer Kreisbahn umläuft, wirken auch hier auf den Messerkopf unerwünschte, zur Bewegungsrichtung der Messerleisten orthogonale Kräfte.

Die Druckschrift DE 24 19 361 A1 offenbart ein elektromotorisch angetriebenes Gartengerät mit einem hin- und hergehend bewegten Werkzeug, das durch einen linearen Induktionsmotor angetrieben ist.

Aufgabe der Erfindung ist, ein Schneidwerk zu schaffen, das energieeffizient und verschleißarm betreibbar ist.

Die Aufgabe wird gelöst, indem bei einem Schneidwerk für eine landwirtschaftliche Erntemaschine mit einer linear oszillierend beweglichen Messerleiste und einer elektrischen Antriebsmaschine zum Antreiben der Bewegung der Messerleiste die Antriebsmaschine als Linearmotor ausgebildet ist. So entfällt die Notwendigkeit, zwischen Antriebsmaschine und Messerleiste ein Getriebe vorzusehen, und auch die mit einem solchen Getriebe zwangsläufig verbundenen Reibungsverluste entfallen. Da außerdem von vornherein keine Bewegungskomponente quer zur Bewegungsrichtung der Messerleiste erzeugt zu werden braucht, kann auch vermieden werden, dass die Messerleiste verschleißfördernden Querkräften ausgesetzt ist.

Vorzugsweise ist ein Läufer des Linearmotors starr an die Messerleiste gekoppelt; er kann integraler Bestandteil der Messerleiste sein.

Um den Läufer des Linearmotors exakt in Richtung eines ihn führenden Kanals anzutreiben, umfasst ein Ständer des Linearmotors erfindungsgemäß wenigstens ein Paar von Polschuhen, die einander an zwei Seiten des Kanals orthogonal zur Bewegungsrichtung des Läufers gegenüberliegen. Diese Polschuhe können zu einem gleichen Joch gehören, das sich hufeisenförmig um den Kanal erstreckt. Ein günstigeres Verhältnis von Antriebsleistung zu Masse des Linearmotors ist allerdings erreichbar, wenn der Ständer wenigstens ein zweites Paar von Polschuhen umfasst, wobei jeweils ein erster Polschuh jedes Paar zu einem an einer ersten Seite des Kanals angeordneten ersten Joch und der zweite Polschuh zu einem an der anderen Seite des Kanals angeordneten zweiten Joch gehört.

Eine Spule kann hier um einen sich in Bewegungsrichtung des Läufers erstreckenden Abschnitt wenigstens eines der Joche herum angeordnet sein.

Um die Effizienz des Linearmotors weiter zu verbessern, kann der Ständer ein drittes Paar von Polschuhen umfassen, die zwischen dem ersten und dem zweiten Paar von Polschuhen angeordnet sind, und die Joche umfassen jeweils einen sich zwischen den Polschuhen des ersten und des zweiten Paars erstreckenden Bügel und einem von dem Bügel abzweigenden, den Polschuh des dritten Paars tragenden Arm, wobei eine Spule um diesen Arm herum angeordnet ist.

Die Messerleiste kann durch eine Rückstellfeder in eine Gleichgewichtslage beaufschlagt sein.

Der Läufer umfasst vorzugsweise wenigstens eine Spule, deren Achse parallel zu einem zwischen den Polschuhen eines Paars bestehenden Magnetfeld ausgerichtet ist.

Wenn drei Paare von Polschuhen vorhanden sind, können zweckmäßigerweise zwei Spulen am Läufer vorgesehen sein.

Die Abmessungen der Spule oder Spulen des Läufers in Bewegungsrichtung der Messerleiste sollten dem Abstand zwischen benachbarten Paaren von Polschuhen entsprechen.

Wenn erforderlich, können entlang einer Messerleiste mehrere Linearmotoren wie oben beschrieben verteilt sein.

Für die Energieversorgung des Linearmotors sollte ein Wechselrichter vorhanden sein, der eingerichtet ist, wenigstens eine der Spulen des Linearmotors mit einer gepulsten Spannung mit alternierender Polarität zu beaufschlagen.

Wenn die mit alternierenden Spannungsimpulsen beaufschlagte Spule eine Spule des Läufers ist, sollten Spulen des Ständers mit einer Gleichspannung beaufschlagt sein. Diese kann kontinuierlich oder im Wesentlichen synchron zu der alternierenden Spannung gepulst sein. Umgekehrt sollte, wenn der Ständer mit der alternierend gepulsten Spannung beaufschlagt ist, der Läufer mit Gleichspannung versorgt sein.

Die Dauer der Impulse sollte steuerbar sein, um die Kraft des Messers an Bestand und Dichte des Pflanzenbestandes anpassen und/oder die Bewegungsfrequenz des Messers variieren zu können.

Insbesondere dann, wenn keine Rückstellfeder vorgesehen ist, um die Bewegungsenergie der Messerleiste am Umkehrpunkt ihrer Bewegung zwischenzuspeichern, muss die Messerleiste durch den Linearmotor selbst verzögert werden. Um einen energieeffizienten Betrieb zu ermöglichen, sollte der Wechselrichter daher eingerichtet sein, im Vierquadrantenbetrieb zu arbeiten. So kann in einer generatorischen, bremsenden Betriebsphase des Linearmotors (oder der Linearmotoren) kinetische Energie des Läufers zurückgewonnen werden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Draufsicht auf ein Schneidwerk;
- Fig. 2: eine schematische Darstellung einer Messerleiste gemäß der Erfindung;
- Fig. 3: eine erste Ausgestaltung eines Linearmotors zum Antreiben der Messerleiste;
- Fig. 4: eine zweite Ausgestaltung des Linearmotors;
- Fig. 5: eine schematische Darstellung des Wechselrichters; und
- Fig. 6: ein Zeitdiagramm von von dem Wechselrichter ausgegebenen Spannungsimpulsen.

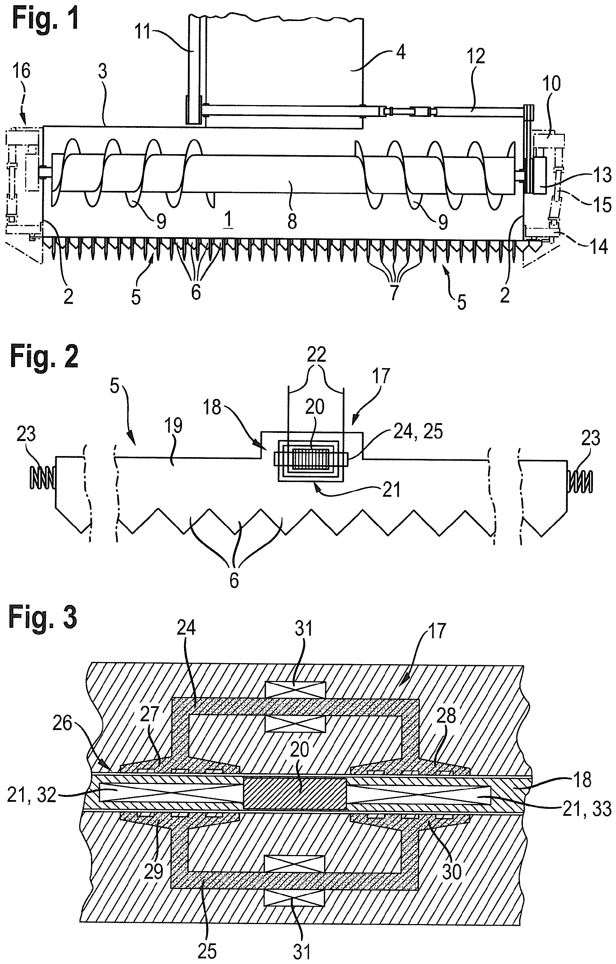

Fig. 1 zeigt eine Draufsicht auf ein Schneidwerk von an sich bekannter Bauart für einen Mähdrescher, einen Feldhäcksler oder eine andere selbstfahrende Erntemaschine. Ein Trägerrahmen des Schneidwerks umfasst eine im Wesentlichen horizontale Bodenplatte 1, vertikale Seitenwangen 2 an einem linken und rechten Rand der Bodenplatte 1 sowie eine Rückwand 3, die die Hinterkanten der Bodenplatte 1 und der Seitenwange 2 verbindet und eine mittige Öffnung aufweist, an der ein Schrägförderer 4 anschließt.

Eine Vielzahl von entlang einer Vorderkante der Bodenplatte 1 verteilten dreieckigen Zähnen 6 gehören zu einer oder mehreren Messerleisten 5, die in einer Schiene am vorderen Rand der Bodenplatte 1 horizontal verschiebbar montiert sind. Im hier betrachteten Fall sind zwei Messerleisten 5 vorgesehen, von denen jedes eine Hälfte der Arbeitsbreite des Schneidwerks einnimmt und die spiegelbildlich zueinander angetrieben sind, so dass ihr gemeinsamer Schwerpunkt in Ruhe bleibt und keine Querschwingungen des Schneidwerks als Ganzes angeregt werden. Am vorderen Rand der Bodenplatte 1 sind zahlreiche Finger 7 ortsfest montiert, an denen sich bei der Bewegung der Messerleisten 5 die Zähne 6 vorbeibewegen. Indem dabei schräge Kanten der Zähne 6 über seitliche Kanten der Finger 7 herstreichen, wird in ihre Reichweite gelangendes Erntegut gekappt und fällt auf die Bodenplatte 1.

Eine zwischen den Seitenwangen 2 drehbar montierte Einzugwalze 8 ist mit zwei gegenläufigen Schnecken 9 besetzt, die das abgeschnittene Erntegut von den Seiten der Bodenplatte 1 zur Mitte schieben und dem Schrägförderer 4 zuführen.

Da die Einzugwalze 8 sich über die gesamte Breite der Bodenplatte 1 erstreckt, müssen Antriebsmittel für die Einzugwalze 8 jenseits der Seitenwangen 2 Platz finden. Wenn in an sich bekannter, nicht erfindungsgemäßer Weise Einzugwalze 8 und Messerleisten 5 von einem Motor eines den Erntevorsatz tragenden Fahrzeugs angetrieben sind, dann umfassen diese Antriebsmittel, wie in Fig. 1 schraffiert dargestellt, ein Verteilergetriebe 10, hier an der Außenseite der rechten Seitenwange 2 angeordnet, das vom Motor über einen Treibriemen 11 und eine quer zur Fahrtrichtung orientierte Welle 12 angetrieben ist, ein Kegelradgetriebe 13, das Drehmoment vom Verteilergetriebe 10 auf die Einzugwalze 8 überträgt, sowie ein Taumelgetriebe 14, das an das Verteilergetriebe 10 über eine Gelenkwelle 15 gekoppelt ist und eine rechte Messerleiste 5 antreibt, sowie, an der linken Seitenwange 2, ein Getriebe 16, das die Drehung der Einzugwalze 8 in eine oszillierende Bewegung der zweiten Messerleiste 5 umsetzt. Aufgrund dieser diversen Getriebe ist die tatsächliche Breite des Schneidwerks deutlich größer als die Arbeitsbreite, so dass beim Abernten einer Fläche Pflanzen, die sich zwar vor dem Schneidwerk, aber nicht vor den Messerleisten 5 befinden und nicht geschnitten werden können, von einem Getriebegehäuse zur Seite weggedrückt werden müssen.

Wenn die Messerleisten 5 auf anderem Wege angetrieben werden könnten, ließe sich, wie durch die Schraffur in Fig. 1 angedeutet, die seitliche Ausladung des Schneidwerks deutlich verringern, und die Gefahr von Erntegutverlusten durch das Wegdrücken von Pflanzen wären erheblich verringert.

Fig. 2 zeigt eine schematische Draufsicht auf eine Messerleiste 5 zur Verwendung in einem erfindungsgemäßen Schneidwerk, die den Wegfall der in Fig. 1 gestrichelt dargestellten Komponenten ermöglicht.

Die Messerleiste 5 umfasst eine langgestreckte Grundplatte 19, an deren Vorderkante die Zähne 6 befestigt sind. In eine Aussparung der Grundplatte ist ein geblechter Eisenkern 20, umgeben von einer flachen Spule 21, eingelassen. Die Spule 21 ist über flexible elektrische Zuleitungen 22 mit einem in der Figur nicht dargestellten Wechselrichter verbunden.

Die Messerleiste 5 kann entlang der Bodenplatte 1 frei beweglich sein; im hier gezeigten Fall sind Rückstellfedern 23 einerseits mit der Messerleiste 5 und andererseits mit der Bodenplatte 1 verbunden, um eine Ruhestellung der Messerleiste 5 festzulegen. Die Rückstellfedern 23 sind hier als Schraubenfedern dargestellt; andere Federtypen kommen ebenfalls in Betracht. Insbesondere Blattfedern können nicht nur zum Rückstellen der Messerleiste 5 in eine Gleichgewichtslage, sondern auch zur Führung der Bewegung der Messerleiste 5 entlang der Vorderkante der Bodenplatte 1 beitragen, sodass es sich um ein Feder Masse Dämpfer System handelt.

Ein Ständer des Linearmotors 17 ist durch über und unter der Spule 21 und dem Eisenkern 20 angeordnete Magnet joche 24, 25 gebildet, die in Fig. 3 deutlicher zu erkennen sind.

Fig. 3 zeigt einen Schnitt durch den Linearmotor 17 entlang einer vertikalen Schnittebene. Die Magnetjoche 24, 25 erstrecken sich hier paarweise oberhalb und unterhalb eines Kanals 26, in dem der Läufer 18 horizontal linear beweglich geführt ist. Denkbar wäre aber auch ein Aufbau, bei dem jeweils nur ein Magnetjoch oberhalb oder unterhalb des Kanals 26 mit dem Läufer interagiert. Die Joche 24, 25 haben im Wesentlichen C-förmige Bügel, die an ihren Enden je zwei dem Kanal 26 zugewandte Polschuhe 27, 28 bzw. 29, 30 tragen. Die Polschuhe eines Paars, 27 und 29 bzw. 28 und 30, liegen einander paarweise gegenüber, um im Spalt ein senkrecht zum Kanal 26 orientiertes Magnetfeld zu erzeugen. Wird ein einzelnes Magnetjoch mit einem Läufer eingesetzt, so bildet sich ebenfalls ein senkrechtes Magnetfeld aus, wobei der Rückschluss des Magnetfeldes über den Läufer stattfindet.

Um einen zentralen Abschnitt der Bügel der Magnetjoche 24, 25 herum sind Spulen 31 angeordnet.Die Spulen 31 sind parallel oder in Reihe so verschaltet, dass sie wenn Strom führend, zusammen ein im Uhrzeiger- oder Gegenuhrzeigersinn orientiertes Magnetfeld in den Jochen 24, 25 ausbilden. Betrachtet man die vertikale Schnittebene aus Fig.3 so ist das sich zwischen dem Paar von sich gegenüberliegenden Polschuhen 27, 29 ausbildende Magnetfeld zu dem Feld zwischen dem Paar von Polschuhen 28, 30 entgegengesetzt.

Eine Achse der Spule 21 ist parallel zu den im Kanal 26 zwischen den Polschuhen 27, 29 bzw. 28, 30 erzeugten Magnetfeldern orientiert, so dass zwischen den Spulen 21, 31 wirkende Magnetkräfte in Richtung des Kanals 26 wirken.

Wenn gleichzeitig mit den Spulen 31 auch die Spule 21 bestromt ist, dann ist die Stromrichtung in ihren zwischen den Polschuhen 27, 29 befindlichen Leitungsadern 32 entgegengesetzt zu derjenigen der Leitungsadern 33 zwischen den Polschuhen 28, 30, so dass auf die in den Leitungsadern 32, 33 fließenden Elektronen eine Lorentzkraft in jeweils gleicher Richtung wirkt und den Läufer 18 seitwärts auslenkt. Wenn der Läufer 18 sich ausgehend von der in Fig. 3 gezeigten Stellung nach links bewegt, nimmt die antreibende Lorentzkraft in dem Maße ab, in dem sich die Leitungsadern 32, 33 aus den Zwischenräumen zwischen den Polschuhpaaren 27, 29 bzw. 28, 30 herausbewegen, während die Rückstellkraft der Federn 23 und, mit Annäherung der Leitungsadern 33 an das Polschuhpaar 27, 29 auch eine nach rechts gerichtete Lorentzkraft zunehmen.

Wenn die Stromrichtung entweder in den Spulen 31 oder in der Spule 21 invertiert wird, kehrt sich die Richtung der Lorentzkraft um, und der Läufer 18 wird nach rechts beschleunigt. Durch periodisches Invertieren der Stromrichtung wird eine Oszillation des Läufers 18 bzw. der Messerleiste 5 angetrieben.

Die Messerleiste 5 bildet mit den Rückstellfedern 23 ein schwingfähiges System, dessen Resonanzfrequenz durch die Masse der Messerleiste 5, die Federkonstante der Federn 23 und die Dämpfung, die die Messerleiste 5 beim Mähen des Ernteguts erfährt, bestimmt sind. Die Frequenz, mit der die Stromrichtung invertiert wird, kann mit dieser Resonanzfrequenz übereinstimmen.

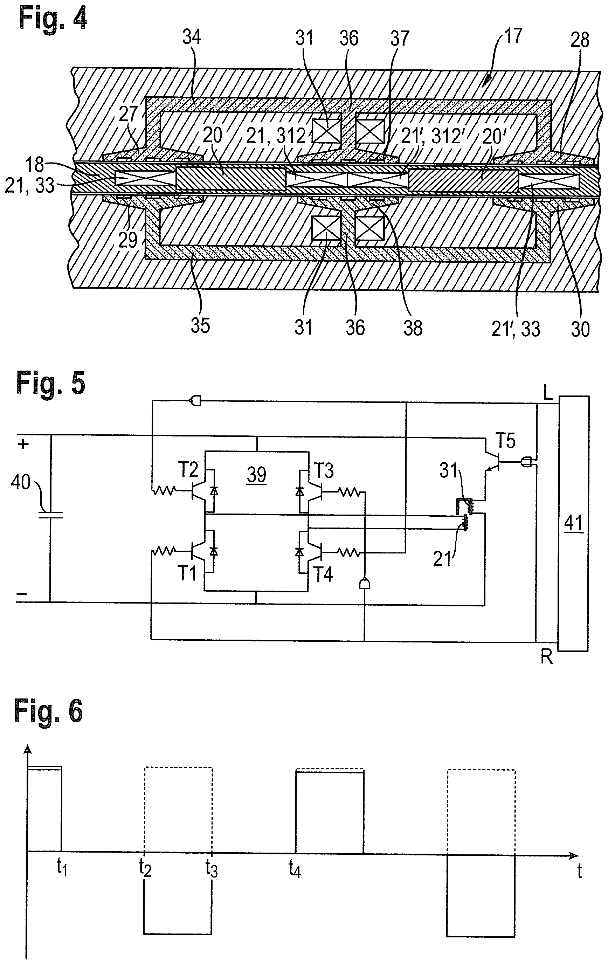

Fig. 4 zeigt eine weiterentwickelte Ausgestaltung des Linearmotors 17. Hier sind zwei Spulen 21, 21' und Eisenkerne 20, 20' in Bewegungsrichtung nebeneinander in die Messerleiste 5 eingelassen oder anderweitig mit dieser verbunden. Die Spulen 21, 21' sind untereinander so verschaltet, dass die Umlaufrichtung des Stroms in den Spulen 21, 21' jeweils unterschiedlich ist, d.h. die zueinander benachbarten Leitungsadern 32 der beiden Spulen führen jeweils Strom in gleicher Richtung, zum Beispiel aus der Ebene der Figur heraus, während die außen liegenden Leitungsadern 33 Strom in Gegenrichtung, zum Beispiel in die Zeichnungsebene hinein, führen.

Die Magnetjoche 34, 35 haben hier jeweils etwa die Form des Buchstaben E, wobei die Spulen 31 jeweils an einem mittleren Arm 36 des E angeordnet sind, um zwischen den einander gegenüberliegenden Polschuhen 37, 38 dieser Arme 36 ein Magnetfeld in einer ersten Richtung und an den außenliegenden Paaren von Polschuhen 27, 29 und 28, 30 ein Magnetfeld in entgegengesetzter Richtung zu erzeugen. Wiederum resultieren aus diesen Magnetfeldern Lorentzkräfte auf die in den Leitungsadern 32, 33 der Spulen 21, 21' fließenden Elektronen, die in einer gleichen Richtung wirken.

Fig. 5 zeigt schematisch den elektrischen Aufbau des Linearmotors 17. Ein Wechselrichter 39 ist mit einer Gleichspannungsquelle 40 verbunden, bei der es sich um die Batterie des den Erntevorsatz tragenden Fahrzeugs, ein auf der Maschine vorhandenes Bordnetz beliebiger Spannung, oder ein aus dem Bordnetz durch DC/DC-Wandler generiertes Netz handeln kann. Der Wechselrichter 39 umfasst vier Leistungstransistoren T1 bis T4, die die Spule oder Spulen 21 des Läufers 18 speisen, sowie einen Leistungsschalter T5 zum Speisen der Ständerspulen 31. Die Zuordnung der Schalter ist willkürlich; denkbar wäre auch, die Ständerspulen 31 über die Schalter T1 bis T4 und die Läuferspulen 21 über den Schalter elektrisch zu versorgen. Ein Oszillator 41 liefert jeweils um 180° gegeneinander phasenversetzte Schaltimpulse L und R, deren Frequenz und Tastverhältnis vom Fahrer des Erntefahrzeugs oder von einer hier nicht dargestellten automatischen Regelschaltung einstellbar sind. Die Frequenz der Schaltimpulse L, R gibt die Schwingfrequenz der Messerleiste 5 vor und ihr Tastverhältnis die Schneidkraft.

Wenn ein erster Schaltimpuls L am Schalter T4 und, mit invertierter Polarität, am Schalter T2 anliegt, öffnen beide Schalter, während die Schalter T1, T3 geschlossen bleiben, und Strom fließt in einer ersten Richtung durch die Läuferspulen 21. Der gleiche Impuls L öffnet auch den Schalter T5, so dass auch die Ständerspulen 31 bestromt sind und die Lorentzkraft den Läufer 18 nach links auslenkt. Nach Ende des Impulses L sind die Spulen 21, 31 stromlos, und der Läufer 18 bewegt sich ohne Antrieb.

Durch einen Signalimpuls R werden die Schalter T1, T3 geöffnet, und die Läuferspulen 21 werden in einer zweiten Richtung, entgegengesetzt zur ersten, bestromt. Der Impuls R öffnet auch den Schalter T5, so dass auch die Ständerspulen 31 wieder bestromt sind, doch ändert sich in diesen die Stromrichtung nicht, so dass auf den Läufer 18 eine Kraft nach rechts wirkt.

Fig. 6 zeigt schematisch die Entwicklung der an den Spulen 21, 31 anliegenden Spannungen im Laufe der Zeit t. Die Spannung an der Ständerspule 31 ist als gestrichelte Kurve, die Spannung an der Läuferspule 21 als durchgezogene Kurve dargestellt; abweichend von der Darstellung der Fig. 6 kann die Spannung an der Ständerspule 31 auch konstant sein. Induktionseffekte sind in der Darstellung vernachlässigt; deswegen erscheinen die einzelnen Impulse jeweils rechteckförmig. Es wird zunächst angenommen, dass sich zum Ursprungszeitpunkt des Diagramms der Läufer 18 sich in der in Fig. 3 gezeigten Stellung, mit den Leitungsadern 32, 33 zwischen den Polschuhpaaren 27, 29 bzw. 28, 30, befindet. In Folge der Stromflüsse in den Spulen 21, 31 wirkt auf den Läufer 18 eine Kraft, die ihn seitwärts, zum Beispiel nach links, beschleunigt. Die auf den Läufer 18 wirkende Lorentzkraft nimmt mit zunehmender Auslenkung ab und würde verschwinden, wenn der Eisenkern 20 eine mittige Position zwischen den Polschuhen 27, 29 erreicht. Dies wird jedoch durch die Rückstellfedern 23 verhindert, die, wenn zum Zeitpunkt t₁ die Schalter T2, T4, T5 schließen, den Läufer 18 wieder nach rechts, in Richtung der Ruhestellung der Fig. 3, beschleunigen.

Idealerweise beginnt der Wechselrichter 39 zum Zeitpunkt t₂, die Spule 21 mit einer negativen Spannung zu beaufschlagen, bevor der Läufer 18 die Ruhestellung der Fig. 3 erreicht hat, so dass ein starker Strom in der Spule 21 fließt, während deren Leitungsadern 32, 33 die Bereiche maximaler Magnetfeldstärke zwischen den Polschuhen 27, 29 bzw. 28, 30 durchlaufen.

Während der Eisenkern 20 beginnt, zwischen die Polschuhe 28, 30 einzurücken, endet zum Zeitpunkt t₃ der Spannungspuls, und die Rückstellfedern 23 bewirken eine Richtungsumkehr des Läufers 18.

Zum Zeitpunkt t₄ wird die Spule 21 wieder mit positiver Spannung beaufschlagt, so dass der Läufer 18 beim Durchlauf durch die Gleichgewichtsstellung der Fig. 3 nach links beschleunigt wird, und der oben beschriebene Zyklus wiederholt sich.

Wenn keine Rückstellfedern vorhanden sind, muss die zwischen den Spulen 21, 31 wirkende Lorentzkraft den Läufer 18 sowohl beschleunigen als auch ihn wieder verzögern und seine Bewegungsrichtung umkehren. Folglich müssen die Spulen 21, 31 auch an den Wendepunkten der Bewegung des Läufers 18 bestromt sein. Die dabei in den Spulen 21, 31 induzierte, über die Batteriespannung hinausgehende Spannung kann in das Bordnetz zurückgespeist werden. Da die zwischen den Spulen 21, 31 wirkende Lorentzkraft umso geringer ist, je näher der Eisenkern 20 am Mittelpunkt des Zwischenraums zwischen den Polschuhen 27, 29 oder 28, 30 ist, ist an diesen Wendepunkten der Wirkungsgrad relativ gering. Daher ist mit den Rückstellfedern 23 ein insgesamt energieeffizienterer Betrieb möglich.

### Bezugszeichen

- 1: Bodenplatte
- 2: Seitenwange
- 3: Rückwand
- 4: Schrägförderer
- 5: Messerleiste
- 6: Zahn
- 7: Finger
- 8: Einzugwalze
- 9: Schnecke
- 10: Verteilergetriebe
- 11: Treibriemen
- 12: Welle
- 13: Kegelradgetriebe
- 14: Taumelgetriebe
- 15: Gelenkwelle
- 16: Getriebe
- 17: Linearmotor
- 18: Läufer
- 19: Grundplatte
- 20: Eisenkern
- 21: Spule
- 22: Zuleitung
- 23: Rückstellfeder
- 24: Magnetjoch
- 25: Magnetjoch
- 26: Kanal
- 27: Polschuh
- 28: Polschuh
- 29: Polschuh
- 30: Polschuh
- 31: Spule
- 32: Leitungsadern
- 33: Leitungsadern
- 34: Magnetjoch
- 35: Magnetjoch
- 36: Arm
- 37: Polschuh
- 38: Polschuh
- 39: Wechselrichter
- 40: Gleichspannungsquelle
- 41: Oszillator

## Patentansprüche

1. Schneidwerk für eine landwirtschaftliche Erntemaschine mit wenigstens einer linear oszillierend beweglichen Messerleiste (5) und wenigstens einer elektrischen Antriebsmaschine zum Antreiben der Bewegung der Messerleiste (5), wobei die Antriebsmaschine als Linearmotor (17) ausgebildet ist,
**dadurch gekennzeichnet, dass**
ein Läufer (18) des Linearmotors (17) in einem Kanal (26) geführt ist und dass ein Ständer des Linearmotors (17) wenigstens ein Paar von Polschuhen (27, 29) umfasst, die einander an zwei Seiten des Kanals (26) orthogonal zur Bewegungsrichtung des Läufers (18) gegenüberliegen.

2. Schneidwerk nach Anspruch 1, **dadurch gekennzeichnet, dass** der Läufer (18) des Linearmotors (17) starr an die Messerleiste (5) gekoppelt ist.

3. Schneidwerk nach Anspruch 1 oder 2, **dadurch gekennzeichnet, dass** der Ständer wenigstens ein zweites Paar von Polschuhen (28, 30) umfasst, wobei jeweils ein erster Polschuh (27, 28) jedes Paars zu einem sich an einer ersten Seite des Kanals (26) angeordneten ersten Joch (24; 34) und der zweite Polschuh (29, 30) zu einem an der anderen Seite des Kanals (26) angeordneten zweiten Joch (25; 35) gehört.

4. Schneidwerk nach Anspruch 3, **dadurch gekennzeichnet, dass** eine Spule (31) um einen sich in der Bewegungsrichtung des Läufers (18) erstreckenden Abschnitt wenigstens eines der Joche (24; 25) herum angeordnet ist.

5. Schneidwerk nach Anspruch 3, **dadurch gekennzeichnet, dass** der Ständer ein drittes Paar von Polschuhen (36, 37) umfasst, die zwischen den ersten (27, 29) und dem zweiten Paar (28, 30) von Polschuhen angeordnet sind und dass die Joche (34, 35) einen sich zwischen den Polschuhen des ersten und zweiten Paars (27, 29; 28, 30) erstreckenden Bügel und einen von dem Bügel abzweigenden, den Polschuh (36, 37) des dritten Paars tragenden Arm (35) aufweisen und eine Spule (31) um den Arm (35) herum angeordnet ist.

6. Schneidwerk nach einem der vorhergehenden Ansprüche, **dadurch gekennzeichnet, dass** die Messerleiste (5) durch eine Rückstellfeder (23) in eine Gleichgewichtslage beaufschlagt ist.

7. Schneidwerk nach einem der Ansprüche 1 - 7, **dadurch gekennzeichnet, dass** der Läufer (18) wenigstens eine Spule (21) umfasst, deren Achse parallel zu einem zwischen den Polschuhen eines Paars (27, 29) bestehenden Magnetfeld ausgerichtet ist.

8. Schneidwerk nach Anspruch 7, **dadurch gekennzeichnet, dass** die Abmessungen der Spule (21) in Bewegungsrichtung dem Abstand zwischen benachbarten Paaren (27, 29; 28, 30) von Polschuhen entspricht.

9. Schneidwerk nach einem der Ansprüche 4 - 8, **gekennzeichnet durch** einem Wechselrichter (39), der eingerichtet ist, wenigstens eine der Spulen (21, 31) des Linearmotors mit einer gepulsten Spannung mit alternierender Polarität zu beaufschlagen.

10. Schneidwerk nach Anspruch 9, **gekennzeichnet durch** einen Oszillator (41), der jeweils um 180° gegeneinander phasenversetzte Schaltimpulse (L, R) liefert, deren Frequenz und Tastverhältnis von einem Fahrer des Erntefahrzeugs oder von einer automatischen Regelschaltung einstellbar sind.

11. Schneidwerk nach Anspruch 9 oder 10, **dadurch gekennzeichnet, dass** der Wechselrichter (39) eingerichtet ist, im Vierquadrantenbetrieb zu arbeiten.

12. Schneidwerk nach einem der Ansprüche 10 - 11, **dadurch gekennzeichnet, dass** die Frequenz der Schaltimpulse (L, R) eine Schwingfrequenz der Messerleiste (5) und das Tastverhältnis eine Schneidkraft der Messerleiste vorgibt.

## Claims

1. A cutting assembly for an agricultural harvesting machine, having at least one linear cutter bar (5) which can move in an oscillating manner and at least one electric drive unit for driving the movement of the cutter bar (5), wherein the drive unit is configured as a linear motor (17),
**characterized in that**
a runner (18) of the linear motor (17) is guided in a channel (26) and **in that** a stator of the linear motor (17) comprises at least one pair of pole pieces (27, 29) which are positioned opposite to each other on two sides of the channel (26) orthogonally to the direction of movement of the runner (18).

2. The cutting assembly according to claim 1, **characterized in that** the runner (18) of the linear motor (17) is rigidly coupled to the cutter bar (5).

3. The cutting assembly according to claim 1 or claim 2, **characterized in that** the stator comprises at least one second pair of pole pieces (28, 30), wherein a respective first pole piece (27, 28) of each pair belongs to a first yoke (24; 34) disposed on a first side of the channel (26) and the second pole piece (29, 30) belongs to a second yoke (25; 35) disposed on the other side of the channel (26).

4. The cutting assembly according to claim 3, **characterized in that** a coil (31) is disposed around a section of at least one of the yokes (24; 25) which extends in the direction of movement of the runner (18).

5. The cutting assembly according to claim 3, **characterized in that** the stator comprises a third pair of pole pieces (36, 37) which are disposed between the first (27, 29) and the second (28, 30) pair of pole pieces and **in that** the yokes (34, 35) have a bracket extending between the pole pieces of the first and second pairs (27, 29; 28, 30) and an arm (35) which branches off the bracket and carries the pole piece (36, 37) of the third pair, and a coil (31) is disposed around the arm (35).

6. The cutting assembly according to one of the preceding claims, **characterized in that** the cutter bar (5) is urged into an equilibrium position by a return spring (23).

7. The cutting assembly according to one of claims 1 to 7, **characterized in that** the runner (18) comprises at least one coil (21) the axis of which is orientated parallel to a magnetic field existing between the pole pieces of a pair (27, 29).

8. The cutting assembly according to claim 7, **characterized in that** the dimensions of the coil (21) in the direction of movement correspond to the distance between adjacent pairs (27, 29; 28, 30) of pole pieces.

9. The cutting assembly according to one of claims 4 to 8, **characterized by** an inverter (39) which is configured to apply a pulsed voltage with alternating polarity to at least one of the coils (21, 31) of the linear motor.

10. The cutting assembly according to claim 9, **characterized by** an oscillator (41) which delivers switching pulses (L, R) the phases of which are respectively offset by 180°, the frequency and duty cycle of which can be adjusted by the driver of the harvesting vehicle or by an automatic control circuit.

11. The cutting assembly according to claim 9 or claim 10, **characterized in that** the inverter (39) is configured for four quadrant operation.

12. The cutting assembly according to claim 10 or claim 11, **characterized in that** the frequency of the switching pulses (L, R) specifies an oscillation frequency for the cutter bar (5) and the duty cycle specifies a cutting power for the cutter bar.

## Revendications

1. Tablier de coupe pour une machine agricole de récolte, comprenant au moins un lamier à déplacement linéairement oscillant (5) et au moins une machine d'entraînement électrique pour entraîner le déplacement du lamier (5), la machine d'entraînement étant conformée en moteur linéaire (17), **caractérisé en ce qu'**un induit (18) du moteur linéaire (17) est guidé dans un canal (26), et **en ce qu'**un stator du moteur linéaire (17) inclut au moins une paire de pièces polaires (27, 29) qui se font face sur deux côtés du canal (26) orthogonalement à la direction de déplacement de l'induit (18).

2. Tablier de coupe selon la revendication 1, **caractérisé en ce que** l'induit (18) du moteur linéaire (17) est couplé de manière rigide au lamier (5).

3. Tablier de coupe selon la revendication 1 ou 2, **caractérisé en ce que** le stator inclut au moins une deuxième paire de pièces polaires (28, 30), respectivement une première pièce polaire (27, 28) de chaque paire appartenant à une première culasse (24 ; 34) disposée sur un premier côté du canal (26) et la deuxième pièce polaire (29, 30) appartenant à une deuxième culasse (25 ; 35) disposée sur l'autre côté du canal (26).

4. Tablier de coupe selon la revendication 3, **caractérisé en ce qu'**une bobine (31) est disposée autour d'une portion au moins d'une des culasses (24 ; 25) s'étendant dans la direction de déplacement de l'induit (18).

5. Tablier de coupe selon la revendication 3, **caractérisé en ce que** le stator inclut une troisième paire de pièces polaires (36, 37) qui sont disposées entre la première (27, 29) et la seconde paire (28, 30) de pièces polaires, et **en ce que** les culasses (34, 35) comportent un étrier s'étendant entre les pièces polaires de la première et de la deuxième paire (27, 29 ; 28, 30) et un bras (35) qui dérive de l'étrier et porte la pièce polaire (36, 37) de la troisième paire, et **en ce qu'**une bobine (31) est disposée autour du bras (35).

6. Tablier de coupe selon une des revendications précédentes, **caractérisé en ce que** le lamier (5) est sollicité vers une position d'équilibre par un ressort de rappel (23).

7. Tablier de coupe selon une des revendications 1-7, **caractérisé en ce que** l'induit (18) inclut au moins une bobine (21) dont l'axe est orienté parallèlement à un champ magnétique existant entre les pièces polaires d'une paire (27, 29).

8. Tablier de coupe selon la revendication 7, **caractérisé en ce que** les dimensions de la bobine (21) dans la direction de déplacement correspondent à la distance entre des paires voisines (27, 29 ; 28, 30) de pièces polaires.

9. Tablier de coupe selon une des revendications 4 à 8, **caractérisé par** un onduleur (39) qui est agencé pour solliciter une des bobines (21, 31) du moteur linéaire avec une tension pulsée à polarité alternée.

10. Tablier de coupe selon la revendication 9, **caractérisé par** un oscillateur (41) qui fournit des impulsions de commutation (L, R) qui sont respectivement déphasées de 180° les unes par rapport aux autres et dont la fréquence et le rapport cyclique sont réglables par un conducteur du véhicule de récolte ou par un circuit de régulation automatique.

11. Tablier de coupe selon la revendication 9 ou 10, **caractérisé en ce que** l'onduleur (39) est agencé pour fonctionner en mode à quatre quadrants.

12. Tablier de coupe selon une des revendications 10-11, **caractérisé en ce que** la fréquence des impulsions de commutation (L, R) prescrit une fréquence d'oscillation du lamier (5) et le rapport cyclique prescrit une force de coupe du lamier.
